# EUROPÄISCHE PATENTSCHRIFT

(11) **EP 3 076 060 B1**
(45) Veröffentlichungstag und Bekanntmachung des Hinweises auf die Patenterteilung: **21.11.2018**
(21) Anmeldenummer: 16153313.8
(22) Anmeldetag: 29.01.2016
(51) Int. Cl.: F16L 23/00, F16L 55/027, F15D 1/02

(54) **ROHRVERBINDUNG ZWISCHEN ZWEI FLANSCHELEMENTEN UND VERWENDUNG DER ROHRVERBINDUNG**
PIPE JOINT BETWEEN TWO FLANGE ELEMENTS AND USE OF THE PIPE JOINT
RACCORD DE TUYAUTERIE ENTRE DEUX ELEMENTS DE BRIDE ET UTILISATION DE RACCORD DE TUYAUTERIE

(30) Priorität: 01.04.2015 DE 102015205880
(43) Veröffentlichungstag der Anmeldung: 05.10.2016
(73) Patentinhaber: ROBERT BOSCH GMBH, 70442 Stuttgart (DE)
(72) Erfinder: Kanka, Christian, 70176 Stuttgart (DE)

(56) Entgegenhaltungen:
- DE-U1- 20 020 014
- FR-A1- 2 902 857
- Armaturenwerk Hötensleben Gmbh: "DIN 11864 / DIN 11853", , 31. März 2013 (2013-03-31), XP055283908, Gefunden im Internet: URL:http://awh.eu/fileadmin/downloads/Bros chueren_und_Kataloge/AWH_Catalog_DIN_11864 -11853_1.0.pdf [gefunden am 2016-06-27]

## Beschreibung

### Stand der Technik

Die Erfindung betrifft eine Rohrverbindung zwischen zwei Flanschelementen nach dem Oberbegriff des Anspruchs 1.

Eine Rohrverbindung nach dem Oberbegriff des Anspruchs 1 ist durch die DIN 11864/1 Form A verwirklicht. Sie weist einen ersten Flansch mit einer radial umlaufenden Ausnehmung zur Aufnahme eines Dichtrings auf, wobei der Dichtring im montierten Zustand in Überdeckung mit der Stirnfläche eines mit dem ersten Flanschelement zusammenwirkenden zweiten Flanschelements angeordnet ist. Eine derartige Rohrverbindung wird insbesondere auch bei aseptischen Anwendungen eingesetzt.

In der Verpackungsindustrie ist es beispielsweise zum Zuführen von Sterilluft für Thermoformanlagen üblich, die Sterilluft durch Rohrleitungen zu führen, wobei die Rohrleitungen mittels gattungsgemäßer Rohrverbindungen miteinander verbunden sind. Darüber hinaus ist es bekannt, innerhalb der Rohrleitungen Blendenelemente vorzusehen, um den Durchfluss bzw. den Druck der durch die Rohrleitung strömenden Luft an der Auslassseite einzustellen.

Eine gattungsgemäße Vorrichtung ist aus der FR 2 902 857 bekannt.

### Offenbarung der Erfindung

Ausgehend von dem dargestellten Stand der Technik liegt der Erfindung die Aufgabe zugrunde, eine Rohrverbindung zwischen zwei Flanschelementen nach dem Oberbegriff des Anspruchs 1 derart weiterzubilden, dass auf einfache Art und Weise die Integration eines Blendenelements im Bereich der Rohrverbindung ermöglicht wird. Dabei sollen insbesondere Spalte, Hinterschnitte o.ä. geometrische Ausgestaltungen im Bereich des Blendenelements vermieden werden, die dazu geeignet sind, dass sich darin Medien mit entsprechenden Keimen o.ä. festsetzen können. Darüber hinaus soll ein besonders einfacher Ein- bzw. Ausbau eines derartigen Blendenelements im Bereich der Rohrverbindung zwischen zwei Flanschelementen ermöglicht werden.

Diese Aufgabe wird bei einer Rohrverbindung zwischen zwei Flanschelementen mit den kennzeichnenden Merkmalen des Anspruchs 1 dadurch gelöst, dass zwischen den beiden zugewandten Stirnflächen der beiden Flanschelemente ein Blendenelement angeordnet ist, wobei das Blendenelement im Bereich seiner gegenüberliegenden Stirnseiten jeweils eine radial umlaufende Ausnehmung zur Aufnahme eines Teilquerschnitts des Dichtelements aufweist. Eine derartige erfindungsgemäße Rohrverbindung ermöglicht es, das Blendenelement als integralen Bestandteil der Rohrverbindung auszubilden, derart, dass das Blendenelement gleichzeitig der Aufnahme von Dichtelementen (O-Ringen) dient. Insbesondere ermöglicht es eine derartige Ausbildung, dass Spalte, Hinterschnitte o.ä. im Bereich der Luft- bzw. Medienführung durch das Blendenelement vermieden werden. Somit wird eine aseptikgerechte Rohrverbindung zwischen zwei Flanschelementen unter Verwendung eines Blendenelements ausgebildet, die sich beispielsweise besonders gut zur Führung von Sterilluft in Verpackungsanlagen eignet.

In erfindungsgemäßer Ausgestaltung, die insbesondere eine definierte Quetsch- bzw. Verformungskraft auf das Dichtelement bei relativ geringen Flächenpressungen auf die an der Verbindung teilnehmenden Elemente ermöglicht, wird vorgeschlagen, dass das Blendenelement scheibenförmig ausgebildet ist und auf seinen einander abgewandten Stirnseiten jeweils eine eben ausgebildete Anlagefläche aufweist, die mit einer radial außerhalb der Ausnehmung am Flanschelement angeordneten Gegen- bzw. Kontaktfläche zusammenwirkt.

Darüber hinaus wird eine besonders gute bzw. sichere Aufnahme des Dichtelements in der Ausnehmung ermöglicht sowie die Ausbildung von
hinsichtlich der Aseptik kritischen Spalten erfindungsgemäß dadurch verhindert, dass die Aufnahme im Blendenelement einen radial umlaufenden Vorsprung aufweist, der in axialer Richtung in Bezug auf eine Längsachse des Blendenelements über die Anlagefläche hinausragt.

Vorteilhafte Weiterbildungen der erfindungsgemäßen Rohrverbindung sind in den Unteransprüchen aufgeführt.
Eine besonders einfache Montage des Blendenelements in der Rohrverbindung, auch beispielsweise im Rahmen von Wartungsarbeiten oder Umbauten wird erzielt, wenn das Blendenelement einen in der Dicke reduzierten zentralen Bereich aufweist, der radial von einem wulstartigen, in der Dicke vergrößerten Bereich umgeben ist, wobei das Blendenelement symmetrisch zu einer Mittelebene ausgebildet ist. Eine derartige Ausgestaltung ermöglicht es beispielsweise auch, das Blendenelement in zwei, um 180° zueinander gedrehte Positionen einzubauen, ohne dass dadurch die Funktionalität der Rohrverbindung bzw. des Blendenelements beeinträchtigt wird.

Um das Ausleiten von sich gegebenenfalls in den Rohrleitungen entstehender Feuchtigkeit bzw. das Passieren von Feuchtigkeit im Bereich des Blendenelements zu ermöglichen, wird vorgeschlagen, dass das Blendenelement ein Durchgangsloch (= Blendenöffnung) aufweist, das außermittig zur Längsachse des Blendenelements angeordnet ist, derart, dass in der Einbaulage der Rohrverbindung die Wand des Durchgangslochs in einem Teilabschnitt mit einer Innenwand des Flanschelements im Bereich der tiefsten Stelle der Rohrverbindung (in Bezug auf die äußere Umgebung) fluchtet.

Wiederum zur möglichst spaltlosen Anordnung eines O-Rings als Dichtelement wird vorgeschlagen, dass die Ausnehmung an dem Blendenelement im Querschnitt teilkreisförmig ausgebildet ist.

Die Erfindung umfasst auch die Verwendung einer soweit beschriebenen erfindungsgemäßen Rohrverbindung zur Sterilluftführung in Verpackungsmaschinen. Ein derartiger Anwendungsfall besteht beispielsweise bei Thermoformanlagen, bei denen eine durch ein Wasserstoffperoxidbad geführte Verpackungsmaterialbahn über Blasluftdüsen von dem Wasserstoffperoxid durch Rakeln bzw. Trocknen entfernt wird. Hierbei wird die zur Trocknung bzw. zum rakeln benötigte, üblicherweise mittels Schlitzdüsen zugeführte (Steril-)Luft innerhalb von Rohrleitungen geführt, welche erfindungsgemäße Rohrverbindungen aufweisen, wobei wenigstens eine Rohrverbindung mit einem Blendenelement ausgestattet ist, um die Durchflussmenge und/oder den Druck an den Schlitzdüsen in gewünschter Art und Weise einstellen zu können.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:

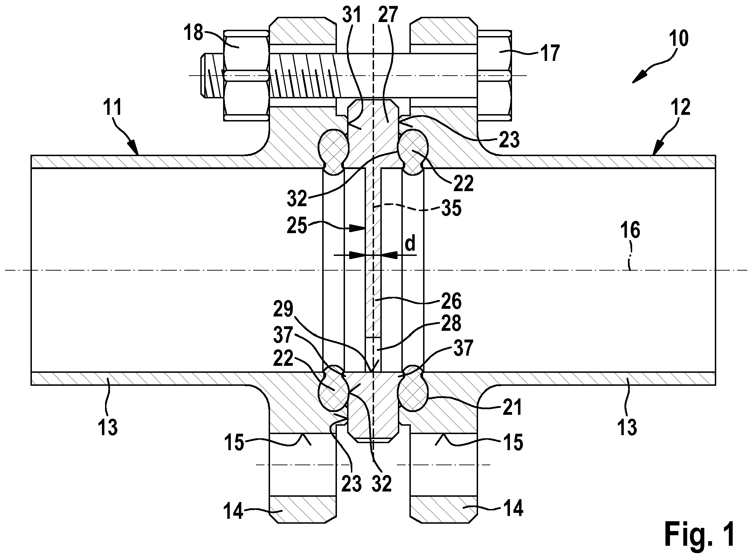

- Fig. 1: eine zwei Flanschelemente aufweisende Rohrverbindung mit zwischen den Flanschelementen angeordnetem Blendenelement in voneinander getrenntem Zustand der Einzelteile und
- Fig. 2: einen Längsschnitt durch die montierte Rohrverbindung unter Verwendung der in der Fig. 1 dargestellten Einzelteile.

Gleiche Elemente bzw. Elemente mit der gleichen Funktion sind in den Figuren mit den gleichen Bezugsziffern versehen.

Die in den Figuren dargestellte Rohrverbindung 10 zwischen zwei Flanschelementen 11, 12 ist insbesondere, und nicht einschränkend, Bestandteil eines Rohrleitungssystems zur Führung von Sterilluft in einer Verpackungsanlage, beispielsweise einer Thermoformanlage.

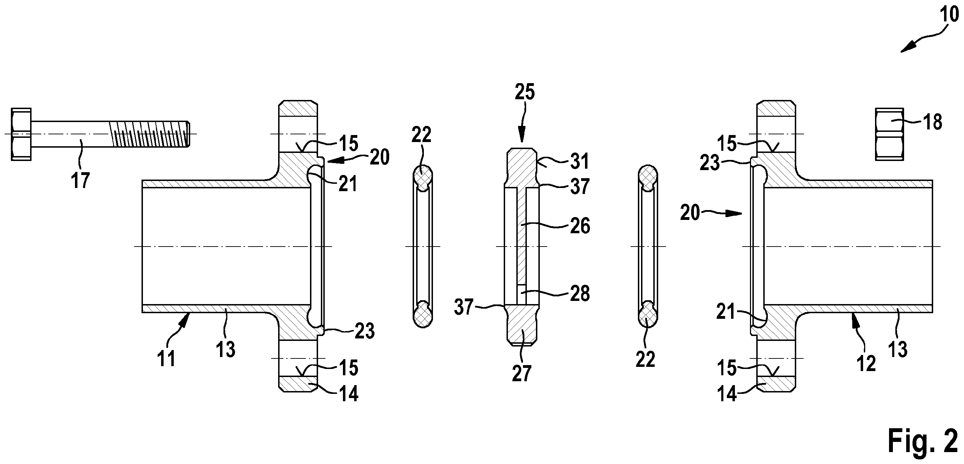

Die beiden im Ausführungsbeispiel identisch ausgebildeten Flanschelemente 11, 12 weisen einen rohrförmigen Bereich 13 mit konstantem Durchmesser auf, der beispielsweise mit einer Stirnseite einer nicht dargestellten Rohrleitung durch eine Schweißverbindung o.ä. verbunden ist. Darüber hinaus weisen die Flanschelemente 11, 12 jeweils einen radial umlaufenden Verbindungsflansch 14 auf, der auf einem Teilkreisdurchmesser mehrere, vorzugsweise in gleichgroßen Winkelabständen zueinander angeordnete Durchgangsöffnungen 15 aufweist, mittels derer im zusammengebauten Zustand der Rohrverbindung 10 entsprechend der Fig. 2 eine axiale Verspannung der Flanschelemente 11, 12 in Richtung der Längsachse 16 mittels mehrerer Befestigungsschrauben 17 sowie damit zusammenwirkender Befestigungsmuttern 18 ermöglicht wird, wobei in den Figuren lediglich eine Befestigungsschraube 17 sowie eine damit zusammenwirkende Befestigungsmutter 18 dargestellt ist.

In einem dem Rohrquerschnitt nahen Teilbereich der Stirnfläche 20 weist jedes Flanschelement 11, 12 eine radial umlaufende erste Ausnehmung 21 auf, deren Form der Aufnahme eines als O-Ring ausgebildeten Dichtelements 22 angepasst und im Querschnitt teilkreisförmig ausgebildet ist. Radial außerhalb der ersten Ausnehmung 21 weist die Stirnfläche 20 eine eben ausgebildete Kontaktfläche 23 auf.

Die beiden Flanschelemente 11, 12 wirken an ihren jeweiligen gegenüberliegenden Stirnflächen 20 mit einem aus einem aseptischen Material, wie Edelstahl o.ä. bestehenden, scheibenförmigen Blendenelement 25 zusammen, das axial zwischen den beiden Stirnflächen 20 der Flanschelemente 11, 12 im Einbauzustand mittels der Befestigungsschrauben 17 und der Befestigungsmuttern 18 axial verspannt ist.

Das Blendenelement 25 weist einen zentralen Bereich 26 mit konstanter Dicke d auf, der radial von einem wulstartigen Randbereich 27 mit größerer Dicke umgeben ist. Der Durchmesser des zentralen Bereichs 26 ist dem Innendurchmesser der Flanschelemente 11, 12 angepasst bzw. entspricht dem Rohrquerschnitt. Im Übergangsbereich zwischen dem zentralen Bereich 26 zum Randbereich 27 weist das Blendenelement 25 eine als Durchgangsbohrung ausgebildete Blendenbohrung 28 auf, deren radial umlaufende Wand 29 derart mit dem Randbereich 27 ausgerichtet ist, dass die Wand 29 bereichsweise bis zum Randbereich 27 reicht. Im Einbauzustand der Rohrverbindung 10 befindet sich die Blendenbohrung 28 gegenüber der Umgebung an der tiefsten Stelle, um einen Durchtritt von Feuchtigkeit o.ä. aufgrund von Schwerkraft zu ermöglichen, ohne dass sich Feuchtigkeit o.ä. stromaufwärts vor der Blendenbohrung 28 staut.

Der wulstartige Randbereich 27 des Blendenelements 25 weist auf seinen einander abgewandten Seiten jeweils eine eben ausgebildete Anlagefläche 31 auf, die im Einbauzustand Gegenfläche zur jeweiligen Kontaktfläche 23 des Flanschelements 11, 12 dient. Darüber hinaus ist der Außendurchmesser des Blendenelements 25 derart auf den Teilkreisdurchmesser bzw. auf die Durchgangsöffnungen 15 der Flanschelemente 11, 12 abgestimmt, dass unter Berücksichtigung der Befestigungsschrauben 17 die Befestigungsschrauben 17 im Einbauzustand des Blendenelements 25 zwischen den Flanschelementen 11, 12 radial innerhalb der Befestigungsschrauben 17 angeordnet ist.

Auf der dem jeweiligen Dichtelement 22 des Flanschelements 11,1 2 zugewandten Stirnseite weist das Blendenelement 25 eine radial umlaufende zweite Ausnehmung 32 auf, die zur Aufnahme des jeweiligen Dichtelements 22 ausgebildet ist und somit komplementär zur ersten Ausnehmung 21 geformt ist bzw. einen teilkreisschnittförmigen Querschnitt aufweist. Auf der dem jeweiligen Flanschelement 11, 12 zugewandten Seite weist das Blendenelement 25 darüber hinaus einen radial umlaufenden Vorsprung 37 auf, der in axialer Richtung, d.h. in Richtung der Längsachse 16 betrachtet, über die Anlagefläche 31 hinausragt. Weiterhin ist das Blendenelement 25 symmetrisch zu einer Mittelebene 35 ausgebildet, welche senkrecht zur Längsachse 16 der Rohrverbindung 10 verläuft.

Zur Montage der Rohrverbindung 10 wird beispielsweise eines der beiden identisch ausgebildeten Dichtelemente 22 in eine der ersten Ausnehmungen 21 eines Flanschelements 11, 12 eingelegt. Anschließend wird das Blendenelement 25 in Überdeckung bzw. in Wirkverbindung mit dem betreffenden Dichtelement 22 gebracht. Anschließend wird das andere Dichtelement 22 entweder in Wirkverbindung mit dem Blendenelement 25 bzw. dem anderen Flanschelement 11, 12 gebracht und die Flanschelemente 11, 12 mit dazwischen angeordnetem Blendenelement 25 axial gefügt, derart, dass die Befestigungsschrauben 17 durch die Durchgangsöffnungen 15 hindurchgeführt werden können und mit den Befestigungsmuttern 18 eine axiale Verspannung der Rohrverbindung 10 ermöglicht wird.

Die soweit beschriebene Rohrverbindung 10 kann in vielfältiger Art und Weise abgewandelt bzw. modifiziert werden, ohne vom Erfindungsgedanken abzuweichen.

## Patentansprüche

1. Rohrverbindung (10) zwischen zwei Flanschelementen (11, 12), wobei wenigstens eine der beiden Flanschelemente (11, 12) eine im Bereich einer Stirnfläche (20) des Flanschelements (11, 12) ausgebildete, radial umlaufende erste Ausnehmung (21) zur Aufnahme eines Teilquerschnitts eines Dichtelement (22) aufweist, und mit wenigstens einem Dichtelement (22), das zwischen den beiden Flanschelementen (11, 12) im montiertem Zustand der Rohrverbindung (10) aufgenommen ist, wobei zwischen den beiden zugewandten Stirnflächen (20) der beiden Flanschelemente (11, 12) ein Blendenelement (25) angeordnet ist, und wobei das Blendenelement (25) im Bereich seiner gegenüberliegenden Stirnseiten jeweils eine radial umlaufende zweite Ausnehmung (32) zur Aufnahme eines Teilquerschnitts des Dichtelements (22) aufweist, wobei das Blendenelement (25) scheibenförmig ausgebildet ist und auf seinen einander abgewandten Stirnseiten jeweils eine eben ausgebildete Anlagefläche (31) aufweist, die mit einer radial außerhalb der ersten Ausnehmung (21) am Flanschelement (11, 12) angeordneten Kontaktfläche (23) zusammenwirkt, **dadurch gekennzeichnet,**
**dass** die zweite Ausnehmung (32) am Blendenelement (25) einen radial umlaufenden Vorsprung (37) aufweist, der in axialer Richtung in Bezug auf eine Längsachse (16) des Blendenelements (25) bzw. der Rohrverbindung (10) über die Anlagefläche (31) hinausragt.

2. Rohrverbindung nach Anspruch 1,
**dadurch gekennzeichnet,**
**dass** das Blendenelement (25) einen in der Dicke (d) reduzierten zentralen Bereich (26) aufweist, der radial von einem wulstartigen, in der Dicke vergrößerten Bereich (27) umgeben ist, und dass das Blendenelement (25) symmetrisch zu einer Mittelebene (35) ausgebildet ist.

3. Rohrverbindung nach einem der Ansprüche 1 bis 2,
**dadurch gekennzeichnet,**
**dass** das Blendenelement (25) ein Durchgangsloch (28) aufweist, und dass das Durchgangsloch (28) außermittig zur Längsachse (16) des Blendenelements (25) bzw. der Rohrverbindung (10) angeordnet ist, derart, dass in der Einbaulage der Rohrverbindung (10) die Wand (29) des Durchgangslochs (28) in einem Teilabschnitt mit der Innenwand des Flanschelements (11, 12) fluchtet, um ein Passieren von Feuchtigkeit aufgrund von Schwerkraft zu ermöglichen.

4. Rohrverbindung nach einem der Ansprüche 1 bis 3,
**dadurch gekennzeichnet,**
**dass** die zweite Ausnehmung (32) an dem Blendenelement (25) im Querschnitt teilkreisförmig ausgebildet ist.

5. Rohrverbindung nach einem der Ansprüche 1 bis 4,
**dadurch gekennzeichnet,**
**dass** das Blendenelement (25) aus einem aseptikfähigen Material, vorzugsweise aus Stahl, besteht.

6. Rohrverbindung nach einem der Ansprüche 1 bis 5,
**dadurch gekennzeichnet,**
**dass** die beiden Flanschelemente (11, 12) mittels mehrerer, parallel zur Längsachse (16) der Rohrverbindung (10) angeordneter Befestigungselemente (17, 18) in axialer Richtung miteinander verbunden sind, und dass das Blendenelement (25) radial innerhalb des Teilkreisdurchmessers für die Befestigungselemente (17, 18) angeordnet ist.

7. Verwendung einer Rohrverbindung (10) nach einem der Ansprüche 1 bis 6 zur Sterilluftzuführung in Verpackungsmaschinen.

## Claims

1. Pipe connection (10) between two flanged elements (11, 12), wherein at least one of the two flanged elements (11, 12) has a radially encircling first recess (21) formed in the region of an end face (20) of the flanged element (11, 12) and intended for receiving a partial cross section of a sealing element (22), and having at least one sealing element (22) which is received between the two flanged elements (11, 12) in the mounted state of the pipe connection (10), wherein a diaphragm element (25) is arranged between the two facing end faces (20) of the two flanged elements (11, 12), and wherein the diaphragm element (25) has, in the region of its opposite end sides, a respective radially encircling second recess (32) for receiving a partial cross section of the sealing element (22), wherein the diaphragm element (25) is disc-shaped and has, on its mutually opposed end sides, a respective planar bearing surface (31) which interacts with a contact surface (23) arranged radially outside the first recess (21) on the flanged element (11, 12),
**characterized**
**in that** the second recess (32) on the diaphragm element (25) has a radially encircling projection (37) which projects beyond the bearing surface (31) in the axial direction with respect to a longitudinal axis (16) of the diaphragm element (25) or of the pipe connection (10).

2. Pipe connection according to Claim 1,
**characterized**
**in that** the diaphragm element (25) has a central region (26) which is reduced in its thickness (d) and which is radially surrounded by a bead-like region (27) which is increased in its thickness, and in that the diaphragm element (25) is formed symmetrically to a centre plane (35) .

3. Pipe connection according to either of Claims 1 or 2,
**characterized**
**in that** the diaphragm element (25) has a through-hole (28), and in that the through-hole (28) is arranged eccentrically to the longitudinal axis (16) of the diaphragm element (25) or of the pipe connection (10) in such a way that, in the installed position of the pipe connection (10), the wall (29) of the through-hole (28) is aligned in a sub-portion with the inner wall of the flanged element (11, 12) in order to allow a passage of moisture resulting from gravitational force.

4. Pipe connection according to one of Claims 1 to 3,
**characterized**
**in that** the second recess (32) on the diaphragm element (25) is partially circular in cross section.

5. Pipe connection according to one of Claims 1 to 4,
**characterized**
**in that** the diaphragm element (25) consists of a material with an aseptic capability, preferably of steel.

6. Pipe connection according to one of Claims 1 to 5,
**characterized**
**in that** the two flanged elements (11, 12) are connected to one another in the axial direction by means of a plurality of fastening elements (17, 18) arranged parallel to the longitudinal axis (16) of the pipe connection (10), and in that the diaphragm element (25) is arranged radially within the pitch circle diameter for the fastening elements (17, 18).

7. Use of a pipe connection (10) according to one of Claims 1 to 6 for feeding sterile air into packaging machines.

## Revendications

1. Raccord tubulaire (10) entre deux éléments de bride (11, 12), au moins l'un des deux éléments de bride (11, 12) présentant
une première découpe (21) radialement périphérique formée au niveau de la surface frontale (20) de l'élément de bride (11, 12) en vue de reprendre une partie de la section transversale d'un élément d'étanchéité (22) et présentant au moins un élément d'étanchéité (22) repris entre les deux éléments de bride (11, 12) lorsque le raccord tubulaire (10) est monté,
un élément d'écran (25) étant disposé entre les deux surfaces frontales (20) tournées l'une vers l'autre des deux éléments de bride (11, 12), l'élément d'écran (25) présentant au niveau de chacun de ses côtés frontaux opposés une deuxième découpe radialement périphérique (32) qui reprend une partie de la section transversale de l'élément d'étanchéité (22), l'élément d'écran (25) étant configuré en forme de plaque et présentant sur chacun de ses côtés frontaux non tournés l'un vers l'autre une surface de pose plane (31) qui coopère avec une surface de contact (23) disposée sur l'élément de bride (11, 12) radialement à l'extérieur de la première découpe (21),
**caractérisé en ce que**
la deuxième découpe (32) ménagée sur l'élément d'écran (25) présente une saillie radiale périphérique (37) qui déborde au-delà de la surface de pose plane (31) dans la direction axiale par rapport à un axe longitudinal (16) de l'élément d'écran (25) ou du raccord tubulaire (10).

2. Raccord tubulaire selon la revendication 1, **caractérisé en ce que** l'élément d'écran (25) présente une partie centrale (26) dont l'épaisseur (d) est réduite et entourée radialement par une partie (27) en forme de bourrelet, de plus grande épaisseur, et **en ce que** l'élément d'écran (25) est symétrique par rapport à un plan central (35).

3. Raccord tubulaire selon l'une des revendications 1 et 2, **caractérisé en ce que** l'élément d'écran (25) présente une perforation (28) et **en ce que** la perforation (28) est disposée à l'extérieur de l'axe longitudinal (16) de l'élément d'écran (25) ou du raccord tubulaire (10) de telle sorte que lorsque le raccord tubulaire (10) est en position montée, une partie de la paroi (29) de la perforation (28) soit alignée sur la paroi intérieure de l'élément de bride (11, 12) pour permettre le passage de l'humidité sous l'action de la gravité.

4. Raccord tubulaire selon l'une des revendications 1 à 3, **caractérisé en ce que** la deuxième découpe radialement périphérique (32) formée sur l'élément d'écran (25) a une section transversale en forme de cercle partiel.

5. Raccord tubulaire selon l'une des revendications 1 à 4, **caractérisé en ce que** l'élément d'écran (25) est constitué d'un matériau susceptible d'être aseptique, de préférence en acier.

6. Raccord tubulaire selon l'une des revendications 1 à 5, **caractérisé en ce que** les deux éléments de bride (11, 12) sont reliés l'un à l'autre dans la direction axiale au moyen de plusièurs éléments de fixation (17, 18) disposés parallèlement à l'axe longitudinal (16) du raccord tubulaire (10) et **en ce que** l'élément d'écran (25) est disposé radialement à l'intérieur du diamètre du cercle partiel prévu pour les éléments de fixation (17, 18).

7. Utilisation d'un raccord tubulaire (10) selon l'une des revendications 1 à 6 pour l'apport d'air de stérilisation dans des machines d'emballage.
